# EUROPÄISCHE PATENTSCHRIFT

(11) **EP 2 007 226 B1**
(45) Veröffentlichungstag und Bekanntmachung des Hinweises auf die Patenterteilung: **07.07.2010**
(21) Anmeldenummer: 07723341.9
(22) Anmeldetag: 17.03.2007
(51) Int. Cl.: A23L 1/237, A23L 1/39, A21D 2/14, A21D 2/36

(54) **SALZERSATZMISCHUNG MIT VERMINDERTEM NACL-GEHALT**
SALT REPLACEMENT MIXTURE WITH REDUCED NACL CONTENT
MÉLANGE SUCCÉDANÉ DE SEL À TENEUR RÉDUITE EN NaCl

(30) Priorität: 11.04.2006 DE 102006017378
(43) Veröffentlichungstag der Anmeldung: 31.12.2008
(73) Patentinhaber: Jungbunzlauer Austria AG, 68526 Ladenburg (DE)
(72) Erfinder: PFEIFFER, Matthias, 67459 Boehl-Iggelheim (DE); SCHOLTEN, Claudia, 68159 Mannheim (DE); OELLERS, Sabine, 68766 Hockenheim (DE)
(74) Vertreter: Wagner, Jutta
(86) Internationale Anmeldenummer: PCT/EP2007/002363
(87) Internationale Veröffentlichungsnummer: WO 2007/118566

(56) Entgegenhaltungen:
- EP-A1- 0 796 558
- EP-A1- 0 919 137
- DE-A1- 3 144 166
- JP-A- 2 265 456
- JP-A- 10 056 997
- JP-A- 10 057 003
- US-A- 4 382 098

## Beschreibung

Die vorliegende Erfindung betrifft Mischungen, welche als Salzersatz und zur Verminderung des Natriumchloridgehalts in Lebensmitteln geeignet sind, sowie ihre Verwendung.

Seit vielen Jahren wird dem Natriumchlorid ein schädlicher Einfluss auf die Gesundheit zugeschrieben, insbesondere soll der Blutdruck durch die Aufnahme von Natriumchlorid ansteigen. Ein hoher Blutdruck bedeutet anerkanntermaßen auch ein erhöhtes Risiko unter anderem für Herz-Kreislauferkrankungen. Obwohl die Wirkung von Natriumchlorid auf den Blutdruck nicht unumstritten ist, wird vor allem für Fertiggerichte und andere industriell gefertigte Lebensmittel schon lange versucht, den Gehalt an Natriumchlorid zu vermindern. Dabei darf aber weder der Geschmack leiden noch kann in manchen Lebensmitteln, wie z.B. Weißbrot, auf die funktionellen Wirkungen des Natriumchlorids verzichtet werden.

Neben einem Ersatz des Natriumchlorid durch klassische Gewürze, die auf eine Beibehaltung des salzigen Geschmacks verzichten, sind vor allem Salzersatzmischungen gebräuchlich, bei denen Natrium durch Kalium, Calcium und/oder Magnesium ersetzt wird. Der Geschmack muss durch Zusätze, wie beispielsweise von organischen Säuren, z.B. Adipin-, Zitronen- oder Glutaminsäure, dem von NaCl wieder angeglichen werden. Beispielhaft sei auf die folgenden Veröffentlichungen verwiesen.

In US 3,514,296 wird ein Gemisch aus NaCl und KCI im Verhältnis 80:20 bis 20:80 als Salzersatz beschrieben.

US 4,068,006 schlägt Gemische aus NaCl, KCI und Zitronensäure vor. Gemäß EP 417 062 wird eine Mischung aus NaCl, KCI und Magnesiumcitrat-5-hydrat verwendet. Gemäß US 5,562,942 sollen 100 Teile einer Mischung aus 30 bis 75 % NaCl und 25 bis 70 % KCl mit 5 bis 60 Teilen Citrat eingesetzt werden.

JP 10056997 schlägt den Einsatz von Alkalimetallgluconaten als Salzersatz vor, die JP 10057003 und die WO 96/17521 beschreiben Mischungen aus Alkalimetallgluconaten und Tafelsalz.

Gemische aus NaCl, KCl und Magnesiumsalzen werden in US 4,473,595 und GB 2396793 vorgeschiagen.

Als Beispiel für den Einsatz von Gewürzen sei auf die US 6,743,461 verwiesen, die eine Mischung aus CaCl₂ mit einem Kaliumsalz, Zitronensäure, Reismehl, Ginger oil, und Aromen vorschlägt.

Der Geschmack von Salzersatzmischungen ohne Natriumchlorid ist im allgemeinen unbefriedigend, so dass in den meisten Mischungen zumindest ein Teil Kochsalz enthalten ist. Aber auch bei solchen Mischungen ergeben sich noch entweder ein deutlicher Beigeschmack (Off-Flavour) oder ein unzureichender Salzgeschmack, besonders wenn die Menge sich nicht deutlich von der vergleichbaren Menge Kochsalz unterscheiden soll.

Es besteht daher weiterhin die Aufgabe, ausreichend salzig schmeckende Zusammensetzungen zu finden, die keinen Beigeschmack aufweisen und gleichzeitig eine Reduktion des NaCl-Gehaltes erlauben.

Überraschend wurde nun gefunden, dass mit Mischungen aus NaCl, KCI und Natriumgluconat, bei denen das Gewichtsverhältnis von KCl zu Gluconat im Bereich von 1,5:1 bis 1:1,5 liegt und die mindestens 45 % NaCl enthalten, die obige Aufgabe gelöst wird.

Zwar schlägt die US 6,242,040 bereits Zusammensetzungen aus 40 bis 400 Teilen Natriumgluconat mit 100 Teilen einer Mischung aus 40 bis 60 % NaCl und 60 bis 40 % KCI vor. Die meisten dieser Zusammensetzungen sind jedoch bei gleicher Menge wie Kochsalz entweder nicht ausreichend salzig oder weisen einen deutlichen Beigeschmack auf.

Nur mit dem erfindungsgemäß beschränkten Verhältnis zwischen Gluconat und KCI gelingt es, ein ausgewogenes Verhältnis zwischen salzigem Geschmack und Freiheit von Beigeschmack zu erreichen. Der Anteil NaCl gewährleistet, dass die einem Lebensmittel zugesetzten Mengen bzw. bei Einsatz als solches die verwendete Menge in etwa derjenigen an Kochsalz entspricht.

Die Erfindung betrifft daher eine Salzersatzmischung enthaltend NaCl. KCI und Natriumgluconat, wobei das Gewichtsverhältnis von KCI zu Natriumgluconat im Bereich von 1,5:1 bis 1:1,5 liegt und der Anteil NaCl mindestens 45 Gew.-% beträgt.

Das Gewichtsverhältnis von Gluconat zu Kaliumchlorid liegt bevorzugt im Bereich von 1,3:1 bis 1:1,3, insbesondere von 1,1:1 bis 1:1,1 und ganz besonders bevorzugt bei 1:1.

Der Anteil an Natriumchlorid sollte für einen ausreichend salzigen Geschmack bei 45 bis 65 Gew.-% und vorzugsweise bei 50 Gew.-% bis 60 Gew.-% liegen. Zwar wären höhere Anteile Kochsalz geschmacklich brauchbar, der Zweck einer Reduktion des NaCl-Gehaltes würde aber bei mehr als 65 Gew.-% NaCl nicht mehr befriedigend erfüllt.

Ein besonderer Vorteil der erfindungsgemäßen Mischungen liegt darin, dass zum Erreichen eines vergleichbaren salzigen Geschmackes wie bei Kochsalz in etwa die gleichen Mengen, d.h. maximal etwa 30 %, vorzugsweise unter 20 % mehr, der Salzersatzmischung eingesetzt werden. Dies erleichtert insbesondere eine Anwendung als Ersatz für Kochsalz in der individuellen Zubereitung von Speisen. Aber auch im Bereich der Lebensmittelindustrie ist es von Vorteil, wenn Zutaten wie Salz bzw. Salzersatz nicht in hohen Mengen enthalten sind. Dies erhöht die Akzeptanz durch die Verbraucher.

Den erfindungsgemäßen Mischungen können in einer bevorzugten Ausführungsform bis zu 5 Gew.-% vorzugsweise bis zu 3 Gew.-% Glucono-delta-Lacton zugefügt werden. Dadurch lässt sich der salzige Geschmack intensivieren. Zusätzlich wird durch Glucono-delta-Lacton der pH-Wert gesenkt, wodurch sich eine verbesserte mikrobielle Stabilität ergibt.

Die erfindungsgemäßen Mischungen können vorteilhaft in der Herstellung von Lebensmitteln verwendet werden, um den Anteil an Natrium im Produkt zu reduzieren ohne dabei den salzigen Geschmack zu verringern. Die Hauptanwendungsgebiete liegen im Fertig- und Halbfertigprodukt-Bereich (z.B. Suppen, Saucen), in der Backwaren-Herstellung (beispielsweise Brot), in Fleischprodukten, Molkereiproduktion (beispielsweise Käse) und im Bereich von Frühstückscerealien. Der geschmackliche (sensorische) Aspekt ist hierbei sehr wichtig. Lebensmittel, in denen der Natriumgehalt reduziert wird, verlieren oft ihren typischen Geschmack und werden vom Konsumenten als fade empfunden. Auch bittere Noten durch die Verwendung von anderen Salzen treten häufig auf. Verwendet man eine erfindungsgemäße Salzersatzmischung, tritt keiner dieser Effekt auf.

Weiterhin eignen sich die erfindungsgemäßen Mischungen als Ersatz für Kochsalz und zur Anwendung in Gewürzmischungen.

Die Mischungen können durch Vermischen der Bestandteile erhalten werden.

Die Erfindung soll anhand der folgenden Beispiele näher erläutert werden, ohne jedoch darauf beschränkt zu sein. Soweit nicht anders angegeben, beziehen sch sämtliche Angaben von Teilen oder Prozenten auf das Gewicht.

### Beispiel 1

Zur Untersuchung des Einflusses verschiedener Verhältnisse KCI:Natriumgluconat wurden Mischungen mit jeweils 60 % NaCl und variierenden Verhältnissen KCI:Natriumgluconat herangezogen. Natriumgluconat wird als NaG abgekürzt. Zur Verkostung wurden Lösungen mit 6 g/Liter in destilliertem Wasser hergestellt. Die Lösungen wurden im Vergleich zu der erfindungsgemäßen Mischung aus 20 % NaG, 20 % KCl, 60 % NaCl verkostet. In Tabelle 1 sind die Ergebnisse zusammengefasst.

**Tabelle 1**

| **KCI** | **NaG** | **KCl/NaG** | **sensorische Beschreibung** |
|---|---|---|---|
| 20 | 20 | 1:1 | salzig, typischer Kochsalz-Geschmack |
| 15 | 25 | 1:1,7 | salzig, aber nicht kochsalztypisch, leichtes Off-Flavour |
| 10 | 30 | 1:3 | salzig mit untypischen Off-Flavour |
| 5 | 35 | 1:7 | salzig, aber nicht kochsalztypisch, Off-Flavour |
| 35 | 5 | 7:1 | deutliche bittere Note, kaum als salzig zu erkennen |
| 30 | 10 | 3:1 | bitter, kaum salzig |
| 25 | 15 | 1,7:1, | weniger salzig als Standard, leicht bittere Note |

Ein erhöhter KCl-Anteil lässt die Mischung schnell bitter schmecken. Ein erhöhter Natriumgluconat-Anteil lässt die Mischung zwar salzig schmecken, allerdings weist die Mischung einen speziellen salzigen Charakter auf, der nicht mit Kochsalz übereinstimmt und somit als Off-Flavour erkannt wird.

### Beispiel 2

Es erfolgte ein Vergleich verschiedener Salzersatzmischungen in einer Tomatensuppe mit einer Suppe mit regulärem Salzgehalt (7 % NaCl). In Tabelle 2 sind die getesteten Mischungen und die Bewertung aufgelistet.

**Tabelle 2**

| **NaCl** | **KCl** | **NaG** | **Anteil** | **pH** | **Bewertung** | **sensorische Beschreibung** |
|---|---|---|---|---|---|---|
| 100 | 0 | 0 | 7 % | 4,54 | | ausgewogener Geschmack, guter Salzgeschmack, fruchtig |
| 0 | 50 | 50 | 39 % | 4,94 | -- | stark salzig mit eindeutiger Bittere; "KCl-Geschmack". |
| 8 | 46 | 46 | 26 % | 4,85 | - | bitter, kaum salzig. |
| 20 | 40 | 40 | 17 % | 4,68 | -/+ | salzig mit bitterer Note. |
| 31 | 34,5 | 34,5 | 13 % | | ++ | Salzig, gut im Geschmack |
| 60 | 20 | 20 | 8% | 4,42 | ++ | Salzig, sehr guter Geschmack, da säuerliche Note voll erhalten bleibt. |

Die Verkostung zeigt, dass nur dann ein angenehmer Geschmack erzielt wird, wenn ausreichende Mengen NaCl vorhanden sind. Trotzdem ist mit einer um lediglich 15 % erhöhten Menge Salzersatzmischung eine deutliche Reduktion des Natriumchloridgehaltes von 25 % möglich. Bei der Mischung mit 31 % NaCl ergibt sich zwar ein guter Geschmack, jedoch wird von dieser Mischung fast die doppelte Menge im Vergleich zu NaCl bei vergleichbarem Geschmack benötigt.

### Beispiel 3

Der Einfluss eines Zusatzes an Glucono-delta-Lacton, GdL abgekürzt, wurde untersucht. Hierzu wurden Mischungen wie in der Tabelle 3 angegeben hergestellt und analog Beispiel 2 in einer Tomatensuppe im Vergleich zu Kochsalz verkostet. Die Ergebnisse fasst Tabelle 3 zusammen.

**Tabelle 3**

| **NaCl** | **KCl** | **NaG** | **GdL** | **Anteil** | **pH** | **Bewertung** | **sensorische Beschreibung** |
|---|---|---|---|---|---|---|---|
| 100 | 0 | 0 | 0 | 7% | 4,54 | | ausgewogener Geschmack, guter Salzgeschmack, fruchtig |
| 0 | 48,5 | 48,5 | 3 | 40 % | 4,76 | -- | bitter; nicht salzig; |
| 8 | 44,5 | 44,5 | 3 | 26 % | 4,71 | - | leicht salzig, deutliche bittere Note; salziger als Standard; |
| 20 | 38,5 | 38,5 | 3 | 17 % | 4,67 | -/+ | zu salzig, salziger als Standard; |
| 31 | 33 | 33 | 3 | 13,2% | 4,40 | ++ | leicht salzig, vergleichbar mit Standard |
| 60 | 18,5 | 18,5 | 3 | 8% | 4,32 | + | salzig |

Es ist erkennbar, dass der Zusatz von Glucono-delta-Lacton den salzigen Geschmack steigert. Ein Verzicht auf mehr als 55 % NaCl ist dennoch nicht möglich. Trotz der als salzig, sogar als deutlicher salzig im Vergleich zu reinem Kochsalz empfundenen Mischung mit 8 % NaCl und 20 % NaCl wird aber der Geschmack dieser Mischungen insgesamt nicht positiv bewertet. Bei der Mischung mit 31 % NaCl ergibt sich wiederum ein guter Geschmack, die benötigte Menge ist aber fast doppelt so hoch wie die an NaCl.

### Beispiel 4

Das funktionelle Verhalten der erfindungsgemäßen Salzersatzmiaschung wurde in einem Standard-Weißbrot-Rezept getestet. Weißbrot reagiert aufgrund seines neutralen Geschmacks und des hohen Gluten-Gehaltes sowohl geschmacklich als auch funktionell besonders empfindlich auf den Gehalt an NaCl. Zum Vergleich wurde in einer Rezeptur 20 g NaCl pro 1000 g Mehl durch 23 g einer erfindungsgemäßen Mischung aus 60 % NaCl, 20 % KCI und 20 % Natriumgluconat ersetzt. Hierbei wird eine Reduktion des Na-Gehaltes um 25 % erreicht. Eine Verkostung durch ein Panel von 15 Profi-Testern ergab, dass sowohl Geschmack als auch Beschaffenheit des Brotes durch den Austausch nicht negativ beeinflusst werden.

Auch die Teigherstellung und Verarbeitung (Backen) erfolgt gemäß Standard-Rezept. Somit konnte gezeigt werden, dass die erfindungsgemäßen Mischungen nicht nur geschmacklich sondern vor allem auch bei der Verarbeitung als gleichwertiger Ersatz von NaCl angesehen werden können. Dies gelingt nur, wenn einerseits das Verhältnis von Kaliumchlorid zu Natriumgluconat eingehalten wird und andererseits ein ausreichender Gehalt an Natriumchlorid vorliegt.

## Patentansprüche

1. Salzersatzmischung enthaltend NaCl, KCI und Natriumgluconat **dadurch gekennzeichnet, dass** das Gewichtsverhältnis von KCI:Natriumgluconat 1,5:1 bis 1:1,5 beträgt und mindestens 45 Gew.-% NaCl enthalten sind.

2. Salzersatzmischung gemäß Anspruch 1, **dadurch gekennzeichnet, dass** 50 bis 60 Gew.-% NaCl enthalten sind.

3. Salzersatzmischung gemäß Anspruch 1 oder 2, **dadurch gekennzeichnet, dass** das Verhältnis von KCI:Natriumgluconat 1,3:1 bis 1:1,3, vorzugsweise 1,1:1 bis 1:1,1 beträgt.

4. Salzersatzmischung gemäß Anspruch 1, 2 oder 3, **dadurch gekennzeichnet, dass** bis zu 5 Gew.-%, vorzugsweise 3 Gew.-% Glucono-delta-Lacton enthalten sind.

5. Verwendung einer Salzersatzmischung gemäß einem der Ansprüche 1 bis 3 als Kochsalzersatz bei der Herstellung von Fertig- und Halbfertigprodukten in der Lebensmittelindustrie oder als Gewürzmischungen.

6. Verwendung gemäß Anspruch 5, **dadurch gekennzeichnet, dass** das Produkt ausgewählt ist unter Suppen, Saucen, Backwaren, Fleischprodukten, Molkereiprodukten und Frühstückscerealien.

7. Verwendung gemäß Anspruch 5, **dadurch gekennzeichnet, dass** die Mischung ohne weitere Zusätze als Salzersatz oder unter Zufügung weiterer Inhaltsstoffe, wie Kräuter und Aromen, als Gewürzmischung verwendet wird.

## Claims

1. A salt substitute mixture containing NaCl, KCI and sodium gluconate, **characterized in that** the ratio by weight of KCI to sodium gluconate is 1.5:1 to 1:1.5 and that at least 45% by weight of sodium chloride is contained.

2. The salt substitute mixture according to claim 1, **characterized in that** 50 to 60% by weight of NaCl are contained.

3. The salt substitute mixture according to claim 1 or 2, **characterized in that** the ratio of KCI to sodium gluconate is 1.3:1 to 1:1.3 and preferably 1.1:1 to 1:1.1.

4. The salt substitute mixture according to claim 1, 2 or 3, **characterized in that** up to 5% by weight and preferably 3% by weight of glucono-delta-lactone are contained.

5. The use of a salt substitute mixture according to any one of the claims 1 to 3 as a common salt substitute for the production of finished and semi-finished products in the food industry or as spice mixtures.

6. The use according to claim 5, **characterized in that** the product is selected from soups, sauces, baked goods, meat products, dairy products and breakfast cereals.

7. The use according to claim 5, **characterized in that** the mixture is used without further additives as a salt substitute or with the addition of further components, such as herbs and aromas, as a spice mixture.

## Revendications

1. Mélange de type succédané de sel contenant du NaCl, du KCI et du gluconate de sodium, **caractérisé en ce que** le rapport pondéral de KCl:gluconate de sodium est de 1,5:1 à 1:1,5 et qu'il contient au moins 45% en poids de NaCl.

2. Mélange de type succédané de sel selon la revendication 1, **caractérisé en ce qu'**il contient 50 à 60% en poids de NaCl.

3. Mélange de type succédané de sel selon la revendication 1 ou 2, **caractérisé en ce que** le rapport de KCl:gluconate de sodium est de 1,3:1 à 1:1,3, de préférence de 1,1:1 à 1:1,1.

4. Mélange de type succédané de sel selon la revendication 1, 2 ou 3, **caractérisé en ce qu'**il contient jusqu'à 5% en poids, de préférence 3% en poids de gluconodelta-lactone.

5. Utilisation d'un mélange de type succédané de sel selon l'une quelconque des revendications 1 à 3 comme succédané de sel de cuisine lors de la préparation de produits finis et semi-finis dans l'industrie des produits alimentaires ou comme mélanges de condiments.

6. Utilisation selon la revendication 5, **caractérisée en ce que** le produit est choisi parmi les soupes, des sauces, les produits de boulangerie, les produits à base de viande, les produits laitiers et les céréales pour petit déjeuner.

7. Utilisation selon la revendication 5, **caractérisée en ce que** le mélange est utilisé sans autre additif comme succédané de sel ou en ajoutant d'autres constituants, tels que des herbes et des aromates, comme mélange de condiments.
